# EUROPEAN PATENT SPECIFICATION

(11) **EP 1 977 171 B1**
(45) Date of publication and mention of the grant of the patent: **14.12.2011**
(21) Application number: 07703715.8
(22) Date of filing: 09.01.2007
(51) Int. Cl.: F24F 5/00, F24F 11/00, F24F 12/00

(54) **COOLING AND VENTILATION DEVICE**
KÜHL- UND LÜFTUNGSVORRICHTUNG
DISPOSITIF DE REFROIDISSEMENT ET DE VENTILATION

(30) Priority: 09.01.2006 GB 0600274
(43) Date of publication of application: 08.10.2008
(73) Proprietor: Oxycom Beheer B.V., 8102 GZ Raalte (NL)
(72) Inventor: VAN HEESWIJK, Frederik Simon, NL-3811 JJ Amersfoort (NL); NIJSSEN, Andreas J.L., NL-7521 AT Enschede (NL)
(74) Representative: Clarkson, Paul Magnus
(86) International application number: PCT/EP2007/050164
(87) International publication number: WO 2007/080162

(56) References cited:
- EP-A- 1 001 228
- WO-A-89/05947
- WO-A-03/091632
- WO-A-03/091633
- WO-A-2005/073656

## Description

### BACKGROUND OF THE INVENTION

### 1. Field of the Invention

The present invention relates to cooling and ventilation devices and more particularly to devices incorporating evaporative heat exchangers. In particular it relates to such devices that can also operate to provide heat recovery in combination with ventilation.

### 2. Description of the Related Art

An evaporative cooler is a device that uses the latent heat of evaporation of a liquid to provide cooling. The principle of evaporative cooling has been known for many centuries. For example, a damp cloth placed over an object will keep the object cool by evaporation of liquid from the cloth. By continuously adding liquid to the cloth, the cooling effect may be maintained indefinitely without input of electrical energy. The lowest temperature that can be reached by evaporation of moisture in this way into an air stream defines the wet-bulb temperature for that air. An indirect evaporative cooler makes use of this principle. A primary or product air stream passing over a primary surface of a heat exchange element may be cooled by a secondary or working air stream passing over and absorbing moisture from a secondary wetted surface of the heat exchanger.

If a quantity of air is cooled by direct evaporation its absolute humidity increases due to the uptake of moisture. Its relative humidity also increases due to its lowered temperature until at the wet bulb temperature it is full saturated with water vapour. If the air is cooled without direct evaporation however, its absolute humidity remains the same. As its temperature decreases only the relative humidity increases until full saturation of the air is reached at the so-called dew point. The dew point is thus lower than the wet bulb temperature and is in fact defined as the temperature to which a body of air must be cooled to reach saturation or 100% relative humidity. At this point, water vapour in the air condenses.

Attempts have been made to improve on the principle of indirect evaporative cooling by cooling or drying the working air stream prior to evaporation taking place. A particularly convenient way of cooling the working air stream is to feedback a portion of the cooled product air. Such devices are often referred to as dew point coolers as they may lower the temperature of the product air to below its wet bulb temperature and close to the dew point. By optimising the surfaces with which the air streams exchange heat, highly effective heat transfer can be achieved. This has been found especially significant in the case of the heat transfer from the wetted secondary surface. In order to provide moisture to the working air stream, the wetted secondary surface may be provided with some form of liquid supply e.g. in the form of a hydrophilic layer. The presence of such a layer can however result in increased thermal isolation of the secondary surface from the working air stream, thus reducing heat transfer.

A particularly efficient form of dew point cooler is known from PCT publications WO03/091632 and WO03/091633. While not wishing to be bound by theory, it is believed that the success of this device is due at least in part to the presence of heat transfer elements on the primary and secondary surfaces. These heat transfer elements may be in the form of fins and are believed to improve transmission of heat from the primary surface to the secondary surface. The fins act both to directly conduct heat and also to break up the various boundary layers that develop in the flow. They also serve to increase the total area available for heat exchange on the relevant surfaces. Further important features of the wetted second surface are known from that document and also from co-pending UK patent application No 0324348.2 WO2005/040693 . Accordingly, by careful choice of the material used as a water retaining layer, optimal evaporation may be achieved without thermal isolation of the secondary surface from the working air stream.

Another particularly effcient dew point cooler is discussed in co-pending PCT patent application No PCT/EP2006/070205 (WO 2007/07/796) . Such a dew point cooler comprises a pair of heat conducting plates arranged in spaced, generally parallel relationship and spacing elements separating the plates from one another and defining primary and secondary flow channels between the plates. In this manner, heat transmission between the primary and secondary channels can take place primarily by conduction along the plates from the region associated with the primary channels to the regions associated with the secondary channels. This is in contrast to conventional arrangements where heat transfer between fluids takes place through a membrane separating the fluids.

Such devices are extremely convenient for cooling, as they are simple to produce and require no refrigerant or compressor. Air may be circulated through the cooler using a low-pressure fan which has low energy consumption and is relatively silent. This makes the dew point cooler ideal for domestic use, especially at night.

The degree of cooling of the product air in an evaporative cooler is determined at least partially by the amount of liquid that can be evaporated into the working air stream. In a dew point cooler configuration, this will depend on the portion of the product air that is returned as the working air stream. This will be referred to in the following as the working fluid/product fluid ratio (WPR). In prior art devices the WPR has been determined by the outlet configuration of the primary channels, where a baffle determines the amount of flow diverted into the secondary channels. This has generally ensured that about 30% of the product air is returned as working air. The remaining 70% is supplied to the room or space where cooling is required. An equal volume of air must therefore be evacuated as waste air from the room. In the past, this waste air has simply been allowed to escape by natural ventilation routes or it has been actively evacuated via a separate ventilation system.

In setting up an evaporative cooling system using a dew point cooler, correct calibration of the system is important in order that the desired WPR is achieved. In actual practice, since most buildings are different, calibration must take place on-site and may involve considerable time. Furthermore, even when initially correctly calibrated, the performance of filters, fans and other components can change with time and cause the WPR to drift. The system may subsequently operate sub-optimally. The problems of set-up and calibration are further complicated if it is also desired to use the heat exchange unit for heat recovery or ventilation purposes or if it is operated with a separate waste air ventilation system. Adequate control of the WPR is also complicated by external factors such as wind pressure at the exterior of a building.

Conventional heat recovery, ventilation and air conditioning systems do no presently provide adequate solutions to these problems as they are not concerned with the practicalities of a partial air-flow through the secondary channels of a dew point cooler. It should be noted that a conventional air-conditioning device operates to cool recirculated air without requiring direct connection to the outside air. A dew point cooler however could not work without such a connection.

It would therefore be desirable to provide a cooling and ventilation device capable of operating according to the dew point cooling principle, in which calibration and installation are simplified. Preferably, this should be achieved using only the inlets and outlets required by conventional ventilation systems.

### BRIEF SUMMARY OF THE INVENTION

According to the present invention, there is provided a cooling and ventilation device according to claim 1 comprising: a product inlet, a product outlet, a waste inlet, a waste outlet, a waste channel connecting the waste inlet to the waste outlet, an evaporative heat exchanger having a primary channel connected between the product inlet and the product outlet and a secondary channel connected between an outlet from the primary channel and the waste channel, a flow control element effective to control flow from the secondary channel to the waste channel and a controller selectively controlling the flow control element to thereby control flow from the secondary channel to the waste channel. The product inlet may be connected to a suitable source of outside air and the product outlet supplied to a habitable space such as the interior of a building or vehicle. The waste inlet may receive expelled air from the habitable space, which is subsequently exhausted to the environment via the waste outlet. In this manner, a device is achieved that can provide all of the benefits of evaporative cooling and ventilation while only requiring two air inlets and two air outlets.

According to a first embodiment of the invention, the flow control element is a valve located between the waste channel and the secondary channel. This form of flow control has been found to operate in an extremely simple and efficient manner without the extra expense and power consumption of an additional fan to control the secondary flow. Of course, the person skilled in the art will understand that alternative flow control elements may be provided, the function of this element being to control flow from the secondary channel to the waste channel. For example, although such embodiment suffers from disadvantages as discussed, a fan, or other forced draft device, may be used to as the flow control element.

According to the invention, the device further comprises a sensor providing a flow signal indicative of the flow through the secondary channel and wherein the controller controls the flow control element on the basis of the flow signal. By determining the secondary flow into the waste channel, careful control of the WFR can be achieved, either to maintain it at a constant value or alternatively to regulate it on the basis of desired flow parameters.

The flow sensor comprises pressure sensors responsive to the pressure drop across the secondary channel. These sensors may be calibrated in the factory and will then provide accurate values for control of the secondary flow, largely independently of the manner or position of installation of the device. Installation of the device is then considerably simplified and there may be less tendency for the WFR to vary with time since the flow characteristics of the secondary channel are generally constant

According to an additional advantage of the invention, a heat recovery valve arrangement may be provided between the waste inlet and an inlet to the secondary channel. This allows switching of the source of fluid supplied to the secondary channel. In a cooling mode, the secondary flow may be provided as a portion of the primary flow from the outlet of the primary channel. In a heat recovery mode, the waste air from the habitable space may be supplied to the secondary channel for heat exchange with the incoming primary air.

Preferably, the device comprises a first fan unit between the product inlet and the primary channel of the evaporative heat exchanger for driving the flow of primary air through the primary channel. The device preferably also comprises a second fan unit in the waste channel adjacent to the waste outlet for driving the flow through the waste channel and/or the secondary channel.

According to the invention, the device further comprises a suitable water distribution system for distributing water to surfaces of the secondary channel for evaporation. There may also be provided a drainage system for recovery of excess water from either the water distribution system or from condensation e.g. during heat recovery.

According to a yet further embodiment of the invention, the device may also comprise a recirculation channel for selectively connecting the waste channel to the product inlet. In this manner, at least some of the waste air may be recirculated through the primary channels for subsequent reuse. This is particularly useful in circumstances where it may be desirable to limit the amount of waste air that is allowed to exhaust from the habitable space. This may be the case when the external temperature and humidity is high. For this reason it may also be desirable to keep the recirculated air separate from the fresh air entering from the product inlet. This may be achieved by having separate product channels for fresh air and recirculated air. The recirculated air may then be preferentially provided to the secondary channel for subsequent exhaust via the waste outlet.

According to a yet further aspect of the invention, there is further provided a heating element provided adjacent to the product outlet for heating a flow of product air prior to supplying it to the habitable space. In this manner, when used for ventilation or heat recovery purposes, additional warmth may be added to the product air to bring its temperature up to the desired value for comfort.

According to a still further embodiment of the invention, a dryer may be provided for removing moisture from the air prior to supplying it to the habitable space. The dryer may be located between the product inlet and the primary channel in order to increase the effectiveness of the evaporative cooling device. Alternatively, the dryer may be provided at the product outlet. In this manner, only the air supplied to the habitable space is dried. In a particularly advantageous alternative, the drier is provided with a direct supply of outside air from the product inlet and the device is operated in a recirculation mode. This has the advantageous effect that the amount of dried fresh air entering the system can be carefully controlled independently of the cooling circulation through the evaporative cooler.

According to the preferred embodiment of the invention, the controller comprises a memory containing a plurality of operational profiles and is active to control the device according to one or more of the operational profiles. The operational profiles may include: a cooling mode; a heat recovery mode; a ventilation mode; a heating mode; a recirculation mode; and a drying mode. The profiles may be manually selected or the device may also include an automatic mode in which the most appropriate profile or combination of profiles is selected in order to correctly condition the habitable space. The device also preferably comprises a plurality of environmental sensors for sensing temperature, pressure or humidity at the inlets and outlets of the device and for providing environmental signals to the controller. The controller may then select and or carry out a particular operational profile on the basis of the environmental signals.

### BRIEF DESCRIPTION OF THE DRAWINGS

Embodiments of the invention will now be described in further detail by way of example only with reference to the accompanying figures, in which:

FIG. 1 is a schematic view of a conventional evaporative heat exchanger operating as a dew point cooler;

FIG. 2 is a schematic view of a cooling and ventilation device according to a first embodiment of the invention;

FIG. 3 is a schematic view of a cooling and ventilation device according to a second embodiment of the invention; and

FIG. 4 is a schematic view of a cooling and ventilation device according to a third embodiment of the invention.

### DESCRIPTION OF ILLUSTRATIVE EMBODIMENTS

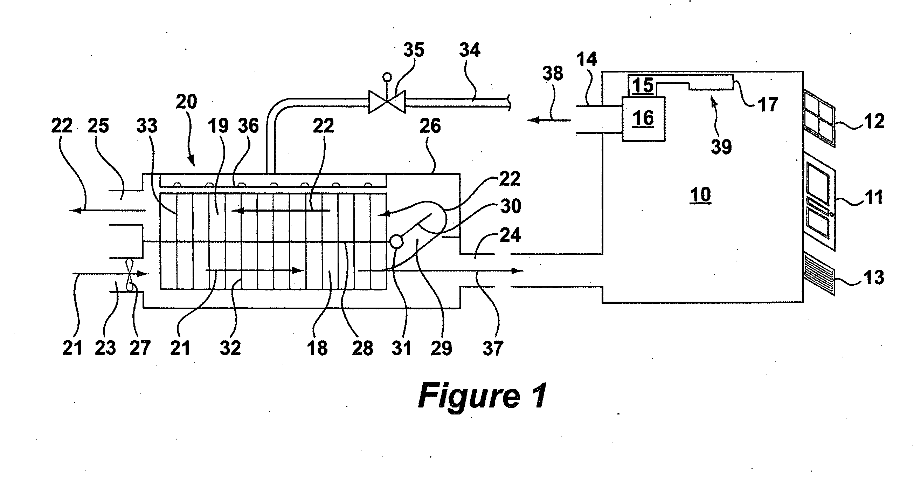

The following is a description of certain embodiments of the invention, given by way of example only and with reference to the drawings. Referring to FIG. 1, there is shown schematically a dew point cooler 20 of the type described in WO03/091633. It comprises a primary channel 18 and a secondary channel 19. A primary flow 21 flows through the primary channel 18. A secondary flow 22 flows through the secondary channel 19. The dew point cooler 20 further comprises a primary inlet 23, a primary outlet 24 and a secondary outlet 25. The inlets and outlets form part of a housing 26. A first fan unit 27 drives the primary flow 21. Placed in the housing is a heat-exchanging membrane 28 which separates primary channel 18 from secondary channel 19. Situated close to the primary outlet 24 is a duct 29 which can be closed and opened by means of a valve 30, controlled by an actuator 31. In the open position of the valve 30, a selected part of primary flow 21 is branched off according to the WPR in the form of secondary flow 22, while the remaining part continues as a product outlet flow 37.

The membrane 28 bears primary fins 32 and secondary fins 33. These serve to break up the relevant boundary layers and to increase the effective surface area of membrane 28. The secondary fins 33 are provided with a hydrophilic coating that can buffer a determined quantity of water. This water is supplied via a water conduit 34 and a dispensing valve 35 to distribution nozzles 36. This ensures a continuous wetting of the coating.

The secondary flow 22 provides evaporation of the water present on the coating, causing a cooling of fins 33, membrane 28 and thereby fins 32. In this manner the primary flow 21 is also cooled. The product outlet flow 37 thus has a smaller flow rate than primary flow 21, but also a reduced temperature. This product outlet flow 37 is supplied for cooling a habitable space 10. The secondary flow 22 entraining the water vapour is discharged to the outside.

It will be clear to the skilled person that the evaporative cooler of FIG. 1 is an example of a suitable evaporative cooler only and that alternative evaporative coolers may be used in its place. For example, an evaporative cooler may be provided which has the same features as the embodiment described in relation to FIG. 1 except that the heat-exchanging membrane 28 is replaced by a spacing element which separates the primary flow 21 and secondary flow 22; and the primary fins 32 and secondary fins 33 are replaced by heat-conducting plates which extend through the spacing element to form primary fins and secondary fins. This results in primary and secondary fins which are formed of a continuous plate of heat-conducting material. The heat transmission between the primary and secondary channels therefore takes place by conduction along the plates from the region associated with the primary channels to the region associated with the secondary channels. The spacing element may or may not be heat conducting because the primary heat conduction path across the spacing element is via the plates.

According to conventional arrangements, the habitable space 10 would have doors 11, windows 12 and passive vents 13. Often, an active waste air outlet 14 would also be provided for active ventilation of a waste outlet flow 38 from the habitable space 10 to the outside. This is shown in the form of a waste channel 15 having a second fan unit 16. For cooling, it is preferable that the warmest air layers are exhausted and for this purpose a waste inlet 17 to the waste channel 15 would be located at an upper level within the space 10 for receiving a waste inlet flow 39. It is noted that the waste channel 15 and second fan unit 16 are not part of the dew point cooler 20.

For operation of the dew point cooler, a quantity of air equal to the product outlet flow 37 must be exhausted from the space 10. This can take place either via the waste channel 14 or via doors 11, windows 12 vents 13 or other natural openings. This quantity is determined by the WPR according to the position of the valve 30. As a result of this configuration, any change to the pressure difference between the primary inlet 23 and the habitable space 10 would significantly affect the quantity of the secondary air flow 22. Such changes could occur due to wind pressure differences between primary inlet and waste outlet, opening of windows or doors, changes in operation of the second fan unit or the like.

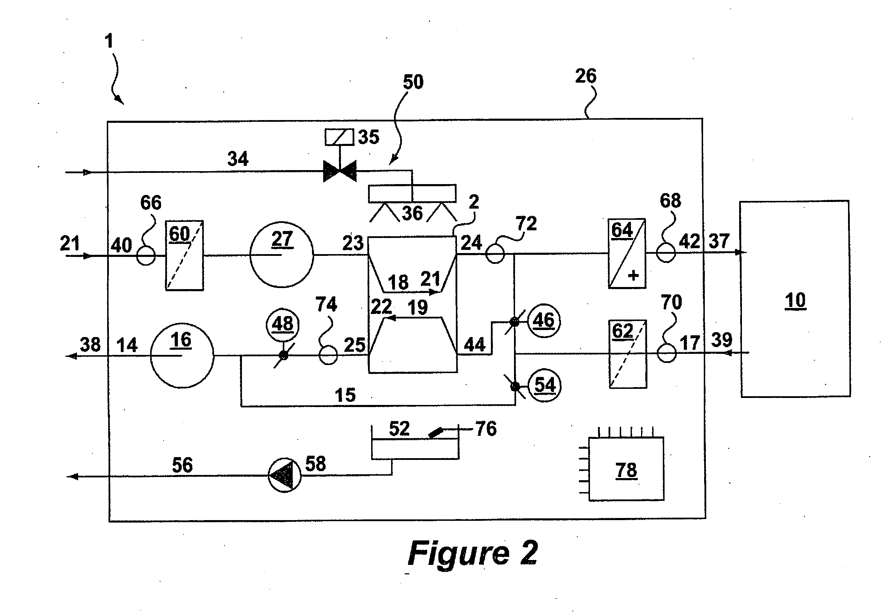

Figure 2 illustrates schematically a cooling and ventilation device 1 according to the present invention operable in various modes of operation. Similar features to those described in relation to Figure 1 will be identified by like numerals.

Referring to Figure 2, the device 1 comprises a housing 26 in which are located a number of components including a heat exchange element 2. The heat exchange element 2 may be as used in the dew point coolers described in relation to Figure 1 above but could also comprise different forms of heat exchange element providing similar or higher efficiency of heat transfer. The housing 26 has a product inlet 40 connecting to a primary inlet 23 of the heat exchange element 2 and a product outlet 42 connected to the primary outlet 24 of the heat exchange element 2. The product outlet 42 is in communication with habitable space 10. There is also provided a waste inlet 17 in communication with the habitable space 10. Waste inlet 17 communicates further with a waste channel 15, leading to a waste outlet 14.

The heat exchange element 2 has a primary channel 18 connecting the primary inlet 23 and the primary outlet 24. It also has a secondary channel 19 connected between a secondary inlet 44 and a secondary outlet 25. The secondary inlet 44 is provided with a changeover valve 46, which in a closed position connects it to the primary outlet 24. In the open position of the changeover valve 46 the secondary inlet 44 is isolated from the primary outlet 24 and connected instead to the waste inlet 17. The secondary outlet 25 is connected to the waste channel 15 via a flow control valve 48. There is also provided a waste control valve 54 in the waste channel 15, between the changeover valve 46 and the point where the waste channel 15 connects to the secondary outlet 25.

In order for the heat exchange element 2 to function as an evaporative cooler, there is provided a water distribution system 50. The water distribution system 50 comprises a water conduit 34 and a dispensing valve 35, leading to distribution nozzles 36. Below the heat exchange element 2 is located a drip tray 52. A drain 56 leads from the drip tray 52 via a pump 58 to the exterior of the housing 26.

A number of further functional components are contained within the housing 26. A first fan unit 27 is provided between the product inlet 40 and the primary inlet 23. A second fan unit 16 is located in the waste channel 15 adjacent to the waste outlet 14. A product filter 60 is located between the product inlet 40 and the first fan unit 27. A waste filter 62 is located in the waste channel 15 adjacent to the waste inlet 17. A heating element 64 is located between the primary outlet 24 and the product outlet 42.

Also located within the housing 26 are a number of sensors and other components for control and regulation of the operation of the cooling and ventilation device 1. A product inlet temperature and humidity sensor 66 is located at the product inlet 40. A product outlet temperature sensor 68 is located at the product outlet 42. A waste inlet temperature sensor 70 is located at the waste inlet 17. Furthermore, there are provided a primary outlet pressure sensor 72 at the primary outlet 24 and a secondary outlet pressure sensor 74 at the secondary outlet 25. A level sensor 76 is provided for determining the level of water in the drip tray 52. All of the sensors are operatively connected to a controller 78. The controller 78 is also operatively connected to the valves 35, 46, 48, 54, heater 64, first and second fan units 27, 16 and pump 58. The controller 78 is provided with the necessary hardware and software to operate the functional components in response to signals received from the sensors and according to predefined and user defined settings. In particular, the controller 78 comprises a memory (not shown) containing a plurality of operational profiles and is active to control the device 1 according to one or more of the operational profiles. According to Figure 2, the sensors and functional components are all located within the housing 3. It will nevertheless be understood by the skilled person that certain of these elements could be located remotely. Thus the temperature sensors 66, 68 and 70 could be located remotely and connected to the controller 78 in any appropriate manner. Similarly, the fan units 16, 27 could be located at a distance from the housing although the compact embodiment as depicted is preferred. Additional sensors could be provided where appropriate to ensure the required operational control.

### I. Cooling Mode

Operation of the cooling and ventilation device 1 in a cooling mode will now be described with reference to Table 1, which indicates the operational profile of certain functional components for this mode of operation for four different suggested levels of cooling.

**Table 1**

| **Ref No.** | **Process/ Referenced Part** | **State** | **Value** | | | |
|---|---|---|---|---|---|---|
| | | | **Level 1** | **Level 2** | **Level 3** | **Level 4** |
| 21 | Product inlet flow | Active | 150m³/h | 300m³/h | 450m³/h | 600m³/h |
| 37 | Product outlet flow | Active | 100m³/h | 200m³/h | 300m³/h | 400m³/h |
| 38 | Waste outletflow | Active | 150m³/h | 300m³/h | 450m³/h | 600m³/h |
| 39 | Waste inlet flow | Active | 100m³/h | 200m³/h | 300m³/h | 400m³/h |
| 22 | Secondary flow | Active | 50m³/h | 100m³/h | 150m³/h | 200m³/h |
| 46 | Changeover valve | Closed | | | | |
| 54 | Waste control valve | Open | | | | |
| 48 | Flow control valve | Regulated by P1-P2 | 15Pa | 30Pa | 45Pa | 60Pa |
| 27 | First fan unit | Set to | 150m³/h | 300m³/h | 450m³/h | 600m³/h |
| 16 | Second fan unit | Set to | 150m³/h | 300m³/h | 450m³/h | 600m³/h |
| 64 | Heating element | Inactive | | | | |
| 60 | Product inlet temperature/humidity sensor | Active | | | | |
| 68 | Product outlet temperature sensor | Active | | | | |
| 70 | Waste inlet temperature sensor | Active | | | | |
| 72 | Primary outlet pressure sensor | Active | | | | |
| 74 | Secondary outlet pressure sensor | Active | | | | |
| 60 | Product inlet filter | Active | | | | |
| 62 | Waste inlet filter | Active | | | | |
| 35 | Dispensing valve | Active | | | | |
| 58 | Pump | Active | | | | |

In the cooling mode, the fan unit 27 is active to deliver outside air as a product inlet flow 21 to the primary channel 18. Changeover valve 46 is closed, whereby a connection is provided from the primary outlet 24 to the secondary channel 19. A part of the product inlet flow 21 is thus diverted as a secondary flow 22 into the secondary channel 19. The remainder of the product inlet flow 21 is delivered to the habitable space 10 as product outlet flow 37. Dispensing valve 35 is active to provide water (intermittently) via distribution nozzles 36 to the secondary channel 19 where it can then evaporate into the secondary flow 22. Pump 58 is active to extract water from the drip tray 52 in response to signals from the level sensor 76.

The second fan unit 16 is also active to extract air from the habitable space 10 through waste inlet 17. The waste control valve 54 is open and the waste inlet flow 39 can flow through the waste channel 15 to the waste outlet 14. According to Table 1, the waste inlet flow 39 corresponds to the product outlet flow 37, although this need not be the case if other ducts are provided into the habitable space 10.

According to the invention, the flow control valve 48 is actively regulated by signals from the controller 78. The controller 78 receives a pressure signal P1 from the primary outlet pressure sensor 72 and a pressure signal P2 from the secondary outlet pressure sensor 74. It then adjusts the degree of opening of the flow control valve 48 to maintain the pressure drop P1-P2 between sensors 72, 74 at a constant value. In this manner, the secondary flow 22 can be maintained constant, since the flow rate through the secondary channel 19 is related to the pressure drop across it. Of particular importance, the secondary flow 22 is no longer dependent upon the waste inlet flow 39.

Although not shown in Table 1, the position of valve 48 may alternatively or additionally be adjusted dependent upon other factors. Thus, if the product inlet flow 21 is particularly dry, the temperature of the product outlet flow 37 may become too low. In this case, the valve 48 may be adjusted to maintain a lower pressure drop and a lower secondary flow 22. The choice of level may be set manually by a user or may also be adjusted on the basis of e.g. the temperature in the habitable space 10.

### II Ventilation Mode

If the temperature in the habitable space 10 is comfortable and cooling is not required, the device 1 may operate in a ventilation mode according to the operational profile of Table 2. In this mode, fresh air is circulated to the space 10 in an amount according to the suggested levels defined in Table 2.

**Table 2**

| **Ref No.** | **Process/ Referenced Part** | **State** | **Value** | | | |
|---|---|---|---|---|---|---|
| | | | **Level 1** | **Level 2** | **Level 3** | **Level 4** |
| 21 | Product inlet flow | Active | 150m³/h | 300m³/h | 450m³/h | 600m³/h |
| 37 | Product outlet flow | Active | 150m³/h | 300m³/h | 450m³/h | 600m³/h |
| 38 | Waste outletflow | Active | 150m³/h | 300m³/h | 450m³/h | 600m³/h |
| 39 | Waste inlet flow | Active | 150m³/h | 300m³/h | 450m³/h | 600m³/h |
| 22 | Secondary flow | Inactive | 0 m³/h | 0 m³/h | 0 m³/h | 0 m³/h |
| 46 | Changeover valve | Closed | | | | |
| 54 | Waste control valve | Open | | | | |
| 48 | Flow control valve | Closed | | | | |
| 27 | First fan unit | Set to | 150m³/h | 300m³/h | 450m³/h | 600m³/h |
| 16 | Second fan unit | Set to | 150m³/h | 300m³/h | 450m^{3/}h | 600m³/h |
| 64 | Heating element | Inactive | | | | |
| 60 | Product inlet temperature/humidity sensor | Active | | | | |
| 68 | Product outlet temperature sensor | Active | | | | |
| 70 | Waste inlet temperature sensor | Active | | | | |
| 72 | Primary outlet pressure sensor | Active | | | | |
| 74 | Secondary outlet pressure sensor | Active | | | | |
| 60 | Product inlet filter | Active | | | | |
| 62 | Waste inlet filter | Active | | | | |
| 35 | Dispensing valve | Inactive | | | | |
| 58 | PUMP | Active | | | | |

According to Table 2, in the ventilation mode, the flow control valve 48 has been closed and the dispensing valve 35 is inactive such that supply of water to the heat exchange element 2 is stopped. The pump 58 is still active should the level in the drip tray 52 rise. The product inlet flow 21 is now equal to the waste inlet flow 39 and the secondary channel 19 is inactive. This has the advantage that the secondary channel 19 retains moisture for subsequent evaporation should the mode be changed to cooling.

### III. Heat Recovery Mode

During cold periods, the device 1 may be operated in a heat recovery mode to provide ventilation. Table 3 indicates the operational profile of certain functional components for this mode of operation for four different suggested levels of ventilation.

**Table 3**

| **Ref No.** | **Process/ Referenced Part** | **State** | **Value** | | | |
|---|---|---|---|---|---|---|
| | | | **Level 1** | **Level 2** | **Level 3** | **Level 4** |
| 21 | Product inlet flow | Active | 100m³/h | 150m³/h | 200m³/h | 250m³/h |
| 37 | Product outlet flow | Active | 100m³/h | 150m³/h | 200m³/h | 250m³/h |
| 38 | Waste outletflow | Active | 100m³/h | 150m³/h | 200m³/h | 250m³/h |
| 39 | Waste inlet flow | Active | 100m³/h | 150m³/h | 200m³/h | 250m³/h |
| 22 | Secondary flow | Inactive | 0 m³/h | 0 m³/h | 0 m³/h | 0 m³/h |
| 46 | Changeover valve | Open | | | | |
| 54 | Waste control valve | Closed | | | | |
| 48 | Flow control valve | Open | | | | |
| 27 | First fan unit | Set to | 100m³/h | 150m³/h | 200m³/h | 250m³/h |
| 16 | Second fan unit | Set to | 100m³/h | 150m*³*/h | 200m³/h | 250m³/h |
| 64 | Heating element | Inactive | | | | |
| 60 | Product inlet temperature/humidity sensor | Active | | | | |
| 68 | Product outlet temperature sensor | Active | | | | |
| 70 | Waste inlet temperature sensor | Active | | | | |
| 72 | Primary outlet pressure sensor | Active | | | | |
| 74 | Secondary outlet pressure sensor | Active | | | | |
| 60 | Product inlet filter | Active | | | | |
| 62 | Waste inlet filter | Active | | | | |
| 35 | Dispensing valve | Inactive | | | | |
| 58 | Pump | Active | | | | |

In this mode there is provided a heat recovery valve arrangement which acts to channel the fluid of the waste channel to the secondary channel, in this manner heat exchange is carried out between the outgoing waste and the incoming product. In the specific example of figure 2, the heat recovery valve arrangement comprises change over valve 46, waste control valve 54 and flow control valve 48. The changeover valve 46 is opened and the waste control valve 54 is closed. The flow control valve 48 is kept in the fully open position. All of the waste inlet flow 39 is now caused to pass through the secondary channel 19 of the heat exchange element 2. Heat exchange with the product inlet flow 21 takes place causing this to be warmed as the secondary flow 22 is cooled. Although the dispensing valve 35 is inactive, the pump 58 may still operate to remove any water collecting due to condensation. Under certain circumstances it may also be desirable to add water or other humidification products to the primary channel 18 or into the product outlet flow 37 in order to increase the humidity in the habitable space 10.

Of significance, it should be noted that during heat recovery use, the flow through the primary channel 18 takes place in the same direction as in the cooling mode. The same applies for the secondary channel 19. In particular the flow through the secondary channel 19 always takes place in the direction of the waste outlet 14 such that any contamination formed in the secondary channel 19 will be directed away from the habitable space 10.

### IV Heating Mode

During even colder periods or if additional comfort is required, the device 1 may be operated in a heat recovery and heating mode to provide ventilation. Table 4 indicates the operational profile of certain functional components for this mode of operation for four different suggested levels of ventilation.

**Table 4**

| **Ref No.** | **Process/ Referenced Part** | **State** | **Value** | | | |
|---|---|---|---|---|---|---|
| | | | **Level 1** | **Levet 2** | **Level 3** | **Level 4** |
| 21 | Product inlet flow | Active | 100m³/h | 150m³/h | 200m³/h | 250m³/h |
| 37 | Product outlet flow | Active | 100m³/h | 150m³/h | 200m³/h | 250m³/h |
| 38 | Waste outletflow | Active | 100m³/h | 150m³/h | 200m³/h | 250m³/h |
| 39 | Waste inlet flow | Active | 100m³/h | 150m³/h | 200m³/h | 250m³/h |
| 22 | Secondary flow | Inactive | 0 m³/h | 0 m³/h | 0 m³/h | 0 m³/h |
| 46 | Changeover valve | Open | | | | |
| 54 | Waste control valve | Closed | | | | |
| 48 | Flow control valve | Open | | | | |
| 27 | First fan unit | Set to | 100m³/h | 150m³/h | 200m³/h | 250m³/h |
| 16 | Second fan unit | Set to | 100m³/h | 150m³/h | 200m³/h | 250m³/h |
| 64 | Heating element | Active | 500 W | 1KW | 1.5 KW | 2KW |
| 60 | Product inlet temperature/humidity sensor | Active | | | | |
| 68 | Product outlet temperature sensor | Active | | | | |
| 70 | Waste inlet temperature sensor | Active | | | | |
| 72 | Primary outlet pressure sensor | Active | | | | |
| 74 | Secondary outlet pressure sensor | Active | | | | |
| 60 | Product inlet filter | Active | | | | |
| 62 | Waste inlet filter | Active | | | | |
| 35 | Dispensing valve | Inactive | | | | |
| 58 | Pump | Active | | | | |

This mode of operation differs from the heat recovery mode only in that the heating element 64 is active to additionally heat the product outlet flow 37. The heating element 64 may be an electrical heater although hot water or other such heating elements may also be used. For extremely low external temperature operation, it is also possible to provide frost protection for the incoming product inlet flow to prevent humid air exiting secondary channel 19 from condensing and freezing around secondary outlet 25. This may be achieved by a small electrical pre-heater (not shown) or similar device at the product inlet 40.

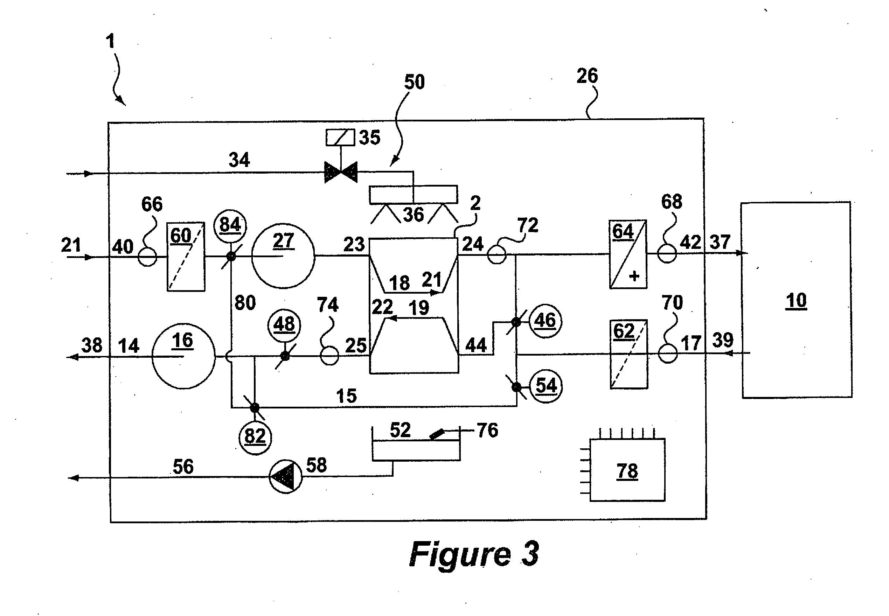

A further embodiment of the invention is shown in Figure 3. The embodiment of Figure 3 corresponds substantially to that disclosed in Figure 2 and those features common to the earlier embodiment will not be further described. According to Figure 3, a recirculation bypass 80 has been added between the waste channel 15 and the product inlet channel between the product filter 60 and the first fan unit 27. A waste channel diverter valve 82 is located at the junction between the recirculation bypass 80 and waste channel 15. A product channel diverter valve 84 is provided at the junction between the recirculation bypass 80 and the product inlet 40. In the closed position of diverter valves 82, 84, flow is diverted to flow through the recirculation bypass 80 and the flow connections with the product inlet 40 and the waste outlet 14 respectively are interrupted. It is noted that although the recirculation bypass 80 is shown internally of the housing 26, it may also be provided as an add-on component at the product inlet side.

### V. Recirculation Heating Mode

Operation of the embodiment of Figure 3 in a recirculation heating mode will be described with reference to Table 5 which shows four different levels of circulation.

**Table 5**

| **Ref No.** | **Process/ Referenced Part** | **State** | **Value** | | | |
|---|---|---|---|---|---|---|
| | | | **Level 1** | **Level 2** | **Level 3** | **Level 4** |
| 21 | Product inlet flow | Inactive | 0m³/h | 0m³/h | 0m³/h | 0m³/h |
| 37 | Product outlet flow | Active | 100m³/h | 150m³/h | 200m³/h | 250m³/h |
| 38 | Waste outletflow | Inactive | 0m³/h | 0m³/h | 0m³/h | 0m³/h |
| 39 | Waste inlet flow | Active | 100m³/h | 150m³/h | 200m³/h | 250m³/h |
| 22 | Secondary flow | Inactive | 0 m³/h | 0 m³/h | 0 m³/h | 0 m³/h |
| 46 | Changeover valve | Open | | | | |
| 54 | Waste control valve | Closed | | | | |
| 48 | Flow control valve | Open | | | | |
| 82 | Waste channel diverter valve | Closed | | | | |
| 84 | Product channel diverter valve | Closed | | | | |
| 27 | First fan unit | Set to | 100m³/h | 150m³/h | 200m³/h | 250m³/h |
| 16 | Second fan unit | Inactive | 0m³/h | 0m³/h | 0m³/h | 0m³/h |
| 64 | Heating element | Active | 500 W | 1KW | 1.5 KW | 2KW |
| 60 | Product inlet temperature/humidity sensor | Active | | | | |
| 68 | Product outlet temperature sensor | Active | | | | |
| 70 | Waste inlet temperature sensor | Active | | | | |
| 72 | Primary outlet pressure sensor | Active | | | | |
| 74 | Secondary outlet pressure sensor | Active | | | | |
| 60 | Product inlet filter | Active | | | | |
| 62 | Waste inlet filter | Active | | | | |
| 35 | Dispensing valve | Inactive | | | | |
| 58 | Pump | Active | | | | |

In this manner, flow may be re-circulated via the heating element 64 on a continuous basis and re-supplied to the habitable space 10. This arrangement may be used to circulate and heat up an (unoccupied) building such as early in the morning in an office building.

### VI. Recirculation Heat Recovery Mode

Operation of the embodiment of Figure 3 in a recirculation heat recovery mode will be described with reference to Table 6 which shows four different levels of circulation.

**Table 6**

| **Ref No.** | **Process/ Referenced Part** | **State** | **Value** | | | |
|---|---|---|---|---|---|---|
| | | | **Level 1** | **Level 2** | **Level 3** | **Level 4** |
| 21 | Product inlet flow | Active | 50m³/h | 100m³/h | 150m³/h | 200m³/h |
| 37 | Product outlet flow | Active | 100m³/h | 150m³/h | 200m³/h | 250m³/h |
| 38 | Waste outletflow | Active | 50m³/h | 100m³/h | 150m³/h | 200m³/h |
| 39 | Waste inlet flow | Active | 100m³/h | 150m³/h | 200m³/h | 250m³/h |
| 22 | Secondary flow | Active | 50 m³/h | 100m³/h | 150m³/h | 200 m³/h |
| 46 | Changeover valve | Open | | | | |
| 54 | Waste control valve | Open | | | | |
| 48 | Flow control valve | Open | | | | |
| 82 | Waste channel diverter valve | Closed | | | | |
| 84 | Product channel diverter valve | Partly open | | | | |
| 27 | First fan unit | Set to | 100m³/h | 150m³/h | 200m³/h | 250m³/h |
| 16 | Second fan unit | Inactive | 50m³/h | 100m³/h | 150m³/h | 200m³/h |
| 64 | Heating element | Active | 500 W | 1KW | 1.5 KW | 2KW |
| 60 | Product inlet temperature/humidity sensor | Active | | | | |
| 68 | Product outlet temperature sensor | Active | | | | |
| 70 | Waste inlet temperature sensor | Active | | | | |
| 72 | Primary outlet pressure sensor | Active | | | | |
| 74 | Secondary outlet pressure sensor | Active | | | | |
| 60 | Product inlet filter | Active | | | | |
| 62 | Waste inlet filter | Active | | | | |
| 35 | Dispensing valve | Inactive | | | | |
| 58 | Pump | Active | | | | |

According to the operational profile for recirculation and heat recovery, the waste inlet flow 39 is split by placing both the waste control valve 54 and the changeover valve 46 in the open position. A portion of the waste inlet flow 39 passes through the secondary channel 19 and is cooled by heat transfer to the primary channel 18. The remainder of the waste inlet flow 39 passes through the first part of the waste channel 15 and is then returned via the recirculation bypass 80 to the primary channel 18. The product channel diverter valve 84 is partly open or floating and allows mixing of fresh air from the product inlet 40 and recirculated air from the recirculation bypasss 80. In this manner, a pre-warming of the product inlet flow may also be achieved as frost protection. It is furthermore noted that in this mode, the second fan unit 16 acts as a flow control element for the flow from the secondary channel 19 to the waste channel 15. Additionally or alternatively, the product channel diverter valve 84 may be regulated by the pressure difference across the secondary channel 19.

### VII Recirculation Cooling Mode

The embodiment of Figure 3 may also be operated in a recirculation mode in combination with dew point cooling according to the operational profile of Table 7.

**Table 6**

| **Ref No.** | **Process/ Referenced Part** | **State** | **Value** | | | |
|---|---|---|---|---|---|---|
| | | | **Leve1** | **Level 2** | **Level 3** | **Level 4** |
| 21 | Product inlet flow | Active | 50m³/h | 100m³/h | 150m³/h | 200m³/h |
| 37 | Product outlet flow | Active | 100m³/h | 200m³/h | 300m³/h | 400m³/h |
| 38 | Waste outletflow | Active | 54m³/h | 100m³/h | 150m³/h | 200m³/h |
| 39 | Waste inlet flow | Active | 100m³/h | 200m³/h | 300m³/h | 400m³/h |
| 22 | secondary flow | Active | 50 m³/h | 100 m³/h | 150 m³/h | 200 m³/h |
| 46 | Changeover valve | Closed | | | | |
| 54 | Waste control valve | Open | | | | |
| 48 | Flow control valve | Open | | | | |
| 82 | Waste channel diverter valve | Closed | | | | |
| 84 | Product channel diverter valve | Partly open | | | | |
| 27 | First fan unit | Set to | 150m³lh | 300m³/h | 450m³/h | 600m³/h |
| 16 | Second fan unit | Set to | 50m³/h | 100m³/h | 150m³/h | 200m³/h |
| 64 | Heating element | Inactive | | | | |
| 60 | Product inlet temperature/humidity sensor | Active | | | | |
| 68 | Product outlet temperature sensor | Active | | | | |
| 70 | Waste inlet temperature sensor | Active | | | | |
| 72 | Primary outlet pressure sensor | Active | | | | |
| 74 | Secondary outlet pressure sensor | Active | | | | |
| 60 | Product inlet filter | Active | | | | |
| 62 | Waste inlet filter | Active | | | | |
| 35 | Dispensing valve | Active | | | | |
| 58 | Pump | Active | | | | |

The operational profile of Table 7, differs from that of Table 6 in that the changeover valve 46 has been closed such that a connection is provided from the primary outlet 24 of the primary channel 18 to the secondary channel 19. Furthermore, the heating element 64 is inactive and the dispensing valve 35 is active. In this respect, the profile corresponds to that of the cooling mode of Figure 2 and Table 1. Contrary to that arrangement however, the waste inlet flow 39 is recirculated via the recirculation bypass 80 to the primary channel 18. It is assumed that the temperature within the habitable space 10 is lower than the external temperature of the product inlet flow 21. In cases of high humidity, it may also be the case that the humidity of the waste inlet flow 39 is also lower than that of the product inlet flow 21. In such circumstances, it is a waste of cooling capacity to allow the waste inlet flow 39 to be exhausted directly. Instead, by recirculating it, it may be assured that only secondary flow 22 is exhausted, having a temperature close to the external temperature and being fully saturated. As in the operational profile of Table 6, the second fan unit 16 acts as a flow control element for the flow from the secondary channel 19 to the waste channel 15. Additionally or alternatively, the product channel diverter valve 84 may be regulated by the pressure difference P1- P2 across the secondary channel 19.

### VIII Cooling and Full Recirculation

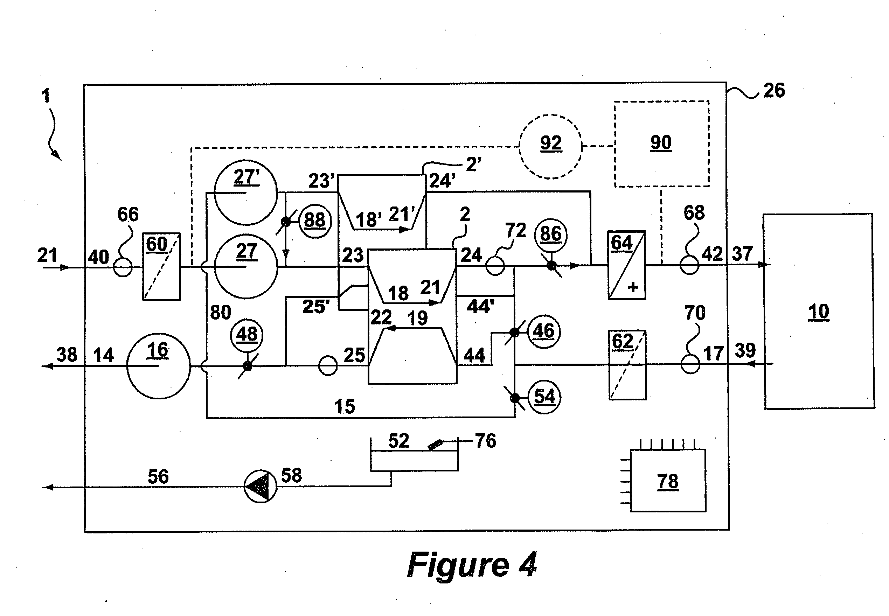

The advantages of recirculation may be further exploited according to the embodiment of Figure 4. According to Figure 4, a number of further components are added to the cooling and ventilation device 2 as previously described. Figure 4 corresponds largely to Figure 3 with the exception that the water distribution system is not shown for reasons of clarity. The embodiment of Figure 4 depicts a second heat exchange element 2' arranged parallel to heat exchange element 2. Although this is shown as a separate element, it may also be in the form of a separated second set of primary and secondary channels 18', 19' in parallel with channels 18, 19. The outlets 25, 25' from both secondary channels 19, 19' join together for connection via flow control valve 48 to waste outlet 14. Only the primary outlet 24 from heat exchange element 2 however is joined to the secondary inlets 44, 44' of both secondary channels 19, 19'. In this manner, first heat exchange element 2 provides the total cooling capacity for both heat exchange elements 2, 2' while the total output of the second heat exchange element 2 is available for cooling of the habitable space 10. As in Figure 3, a recirculation bypass 80 is provided connected to the waste channel 15. In this case however the recirculation bypass 80 is connected to a primary inlet 23' of the second heat exchange element 2' via a fan unit 27'. The primary outlet 24' is connected to the product outlet 42 for supply of cooled air to the habitable space 10. The habitable space 10, the waste channel 15 and the primary channel 18' of the second heat exchange element 2' thus form an effectively closed (indoor) system.

In order to also allow entry of fresh air into the system for delivery to the habitable space 10, a fresh air valve 86 is located between the primary outlet 24 and the product outlet 42. Furthermore, a balance valve 88 is arranged between the primary inlets 23, 23' for allowing an equal amount of flow out of the system by transfer from primary inlet 23' to primary inlet 23. Such an arrangement is most desirable in regions of high humidity where the amount of fresh air admitted to the system must be carefully regulated independently of the circulation flow for cooling.

### IX. Cooling and Humidity Control

For complete humidity control, a dryer 90 may additionally be provided. In Figure 4, the drier 90 (shown in broken lines) may be provided with a drier fan 92 connected to the product inlet 40. The output from the drier 90 is connected to the product outlet 42. In this case, the fresh air valve 86 may be closed. Fresh air enters the system via the dryer 90 for delivery to the habitable space 10. The dried air is not cooled but is however mixed with the cooled primary flow 21' from the second heat exchange element 2'. The amount of air entering via the drier 90 is then balanced by controlled flow through the balance valve 88. It is noted that the manner in which the drier 90 is connected is open to variation although for maximum efficiency, only the air that is finally supplied to the habitable space 10 need be dried. It will be noted that further sensors and control and regulation valves may be provided to ensure correct control of the embodiment of Figure 4. The drier 90 may be a conventional dessicant wheel. More preferably, it can be provided by a further heat exchange element or channel similar to element 2, in which the primary flow is passed through a small compressor before being returned through the secondary channel.

Thus, the invention has been described by reference to certain embodiments discussed above. It will be recognized that these embodiments are susceptible to various modifications and alternative forms well known to those of skill in the art. Many modifications in addition to those described above may be made to the structures and techniques described herein without departing from the scope of the invention as defined by the claims. Accordingly, although specific embodiments have been described, these are examples only and are not limiting upon the scope of the invention.

## Claims

1. A cooling and ventilation device (1) comprising:
a product inlet (40);
a product outlet (42);
a waste inlet (17);
a waste outlet (14);
a waste channel (15)connecting the waste inlet to the waste outlet;
an evaporative heat exchanger (2) having a primary channel (18) connected between the product inlet and the product outlet and a secondary channel (19) connected between an outlet (24) from the primary channel and the waste channel whereby a flow through the secondary channel may be discharged to the waste outlet;
a water distribution system (50) for distributing water to surfaces of the secondary channel for evaporation;
a flow control element (48) effective to control flow from the secondary channel to the waste channel;
a controller (78) selectively controlling the flow control element to thereby control flow from the secondary channel to the waste channel; and
pressure sensors (72, 74) responsive to a pressure drop across the secondary channel to provide a flow signal indicative of the flow through the secondary channel; wherein
the controller is adapted to control the flow control element on the basis of the flow signal.

2. The device according to claim 1, wherein the flow control element is a valve located between the waste channel and the secondary channel.

3. The device according to any of the preceding claims, further comprising a heat recovery valve arrangement (46, 54) between the waste inlet and an inlet to the secondary channel for switching the source of the fluid supplied to the secondary channel between the primary channel in a cooling mode and the waste channel in a heat recovery mode.

4. The device according to any of the preceding claims, further comprising a first fan unit (27) between the product inlet and the primary channel of the evaporative heat exchanger.

5. The device according to any of the preceding claims, further comprising a second fan (16) unit in the waste channel adjacent to the waste outlet.

6. The device according to any of the preceding claims, further comprising a housing (26).

7. The device according to any of the preceding claims, further comprising a recirculation channel (80) for selectively connecting the waste channel to the product inlet.

8. The device according to claim 7, wherein the recirculation channel is directed to a product inlet.

9. The device according to any of the preceding claims, further comprising a heating element (64) provided adjacent to the product outlet for heating a flow of product air.

10. The device according to any of the preceding claims, whereby the controller comprises a memory containing a plurality of operational profiles and is active to control the device according to one or more of the operational profiles.

11. The device according to any of the preceding claims, further comprising a plurality of environment sensors for sensing temperature, pressure or humidity at the inlets and outlets of the device and for providing environmental signals to the controller.

12. The device according to claim 10 and 11, wherein the controller selects an operational profile on the basis of the environmental signals.

13. The device according to claim 10 or claim 12, wherein the operational profiles correspond to one or more of a cooling mode; a heat recovery mode; a ventilation mode; a heating mode; a recirculation mode; and an automatic mode.

## Patentansprüche

1. Kühl- und Lüftungsvorrichtung (1), die aufweist:
einen Produkteinlass (40);
einen Produktauslass (42);
einen Ablufteinlass (17);
einen Abluftauslass (14);
einen Abluftkanal (15), der den Ablufteinlass mit dem Abluftauslass verbindet;
einen Verdampfungswärmetauscher (2) mit einem Primärkanal (18), der zwischen dem Produkteinlass und dem Produktauslass angeschlossen ist, und einem Sekundärkanal (19), der zwischen einem Auslass (24) von dem Primärkanal und dem Abluftkanal angeschlossen ist, wobei eine Strömung durch den Sekundärkanal zu dem Abluftauslass abgelassen werden kann;
ein Wasserverteilungssystem (50) zum Verteilen von Wasser an Oberflächen des Sekundärkanals für die Verdampfung;
ein Strömungssteuerungselement (48), das wirksam ist, um die Strömung von dem Sekundärkanal zu dem Abluftkanal zu steuern;
eine Steuerung (78), um das Strömungssteuerungselement selektiv zu steuern, um dadurch die Strömung von dem Sekundärkanal zu dem Abluftkanal zu steuern; und
Drucksensoren (72, 74), die auf einen Druckabfall an dem Sekundärkanal ansprechen, um ein Flusssignal bereitzustellen, das die Strömung durch den Sekundärkanal anzeigt; wobei
die Steuerung geeignet ist, das Strömungssteuerungselement auf der Basis des Strömungssignals zu steuern.

2. Vorrichtung nach Anspruch 1, wobei das Strömungssteuerungselement ein Ventil ist, das zwischen dem Abluftkanal und dem Sekundärkanal angeordnet ist.

3. Vorrichtung nach einem der vorhergehenden Ansprüche, die ferner eine Wärmerückgewinnungs-Ventilanordnung (46, 54) zwischen dem Ablufteinlass und einem Einlass zu dem Sekundärkanal aufweist, um die Quelle des an den Sekundärkanal zugeführten Fluids zwischen dem Primärkanal in einer Kühlbetriebsart und dem Abluftkanal in einer Wärmerückgewinnungsbetriebsart umzuschalten.

4. Vorrichtung nach einem der vorhergehenden Ansprüche, die ferner eine erste Ventilatoreinheit (27) zwischen dem Produkteinlass und dem Primärkanal des Verdampfungswärmetauschers aufweist.

5. Vorrichtung nach einem der vorhergehenden Ansprüche, die ferner eine zweite Ventilatoreinheit (16) in dem Abluftkanal benachbart zu dem Abluftauslass aufweist.

6. Vorrichtung nach einem der vorhergehenden Ansprüche, die ferner ein Gehäuse (26) aufweist.

7. Vorrichtung nach einem der vorhergehenden Ansprüche, die ferner einen Rückführungskanal (80) zum selektiven Verbinden des Abluftkanals mit dem Produkteinlass aufweist.

8. Vorrichtung nach Anspruch 7, wobei der Rückführungskanal zu einem Produkteinlass geführt ist.

9. Vorrichtung nach einem der vorhergehenden Ansprüche, die ferner ein Heizelement (64) aufweist, das benachbart zu dem Produktauslass bereitgestellt ist, um eine Strömung von Produktluft zu heizen.

10. Vorrichtung nach einem der vorhergehenden Ansprüche, wobei die Steuerung einen Speicher aufweist, der mehrere Betriebsprofile enthält und aktiv ist, um die Vorrichtung gemäß einem oder mehreren der Betriebsprofile zu steuern.

11. Vorrichtung nach einem der vorhergehenden Ansprüche, die ferner mehrere Umgebungssensoren zum Abtasten der Temperatur, des Drucks oder der Feuchtigkeit an den Einlässen und Auslässen der Vorrichtung und zum Bereitstellen von Umgebungssignalen an die Steuerung aufweist.

12. Vorrichtung nach Anspruch 10 und 11, wobei die Steuerung auf der Basis der Umgebungssignale ein Betriebsprofil auswählt.

13. Vorrichtung nach Anspruch 10 oder Anspruch 12, wobei die Betriebsprofile einer oder mehreren der folgenden Betriebsarten entsprechen: einer Kühlbetriebsart, einer Wärmerückgewinnungsbetriebsart, einer Lüftungsbetriebsart, einer Heizbetriebsart, einer Rückführungsbetriebsart und einer Automatikbetriebsart.

## Revendications

1. Dispositif de refroidissement et de ventilation (1) comprenant :
une entrée de produit (40) ;
une sortie de produit (42) ;
une entrée de déchets (17) ;
une sortie de déchets (14) ;
un canal de déchets (15) connectant l'entrée de déchets à la sortie de déchets ;
un échangeur de chaleur par évaporation (2) comprenant un canal primaire (18) connecté entre l'entrée de produit et la sortie de produit et un canal secondaire (19) connecté entre une sortie (24) provenant du canal primaire et le canal de déchets,
moyennant quoi un flux à travers le canal secondaire peut être déchargé vers la sortie de déchets;
un système de distribution d'eau (50) pour distribuer de l'eau sur des surfaces du canal secondaire pour l'évaporation ;
un élément de contrôle de flux (48) opérationnel pour contrôler le flux du canal secondaire au canal de déchets ; et
un dispositif de commande (78) commandant sélectivement l'élément de contrôle de flux pour contrôler ainsi le flux du canal secondaire au canal de déchets ;
des capteurs de pression (72, 74) sensibles à une chute de pression sur le canal secondaire pour fournir un signal de flux indicatif du flux à travers le canal secondaire ; dans lequel
le dispositif de commande est adapté pour commander l'élément de contrôle de flux sur la base du signal de flux.

2. Dispositif selon la revendication 1, dans lequel l'élément de contrôle de flux est une vanne située entre le canal de déchet et le canal secondaire.

3. Dispositif selon l'une quelconque des revendications précédentes, comprenant en outre un agencement de vannes de récupération de chaleur (46, 54) entre l'entrée de déchets et une entrée vers le canal secondaire pour commuter la source du fluide délivré au canal secondaire entre le canal primaire dans un mode de refroidissement et le canal de déchet dans un mode de récupération de chaleur.

4. Dispositif selon l'une quelconque des revendications précédentes, comprenant en outre une première unité de ventilateur (27) entre l'entrée de produit et le canal primaire de l'échangeur de chaleur par évaporation.

5. Dispositif selon l'une quelconque des revendications précédentes, comprenant en outre une deuxième unité de ventilateur (16) dans le canal de déchets adjacent à la sortie de déchets.

6. Dispositif selon l'une quelconque des revendications précédentes, comprenant en outre une enveloppe (26).

7. Dispositif selon l'une quelconque des revendications précédentes, comprenant en outre un canal de recirculation (80) pour connecter sélectivement le canal de déchets à l'entrée de produit.

8. Dispositif selon la revendication 7, dans lequel le canal de recirculation est dirigé vers une entrée de produit.

9. Dispositif selon l'une quelconque des revendications précédentes, comprenant en outre un élément chauffant (64) prédisposé adjacent à la sortie de produit pour chauffer un flux d'air de produit.

10. Dispositif selon l'une quelconque des revendications précédentes, moyennant quoi le dispositif de commande comprend une mémoire contenant une pluralité de profils de fonctionnement et est actif pour contrôler le dispositif en fonction d'un ou plusieurs profils de fonctionnement.

11. Dispositif selon l'une quelconque des revendications précédentes, comprenant en outre une pluralité de capteurs d'environnement pour détecter la température, la pression ou l'humidité au niveau des entrées et des sorties du dispositif et pour fournir des signaux d'environnement au dispositif de commande.

12. Dispositif selon les revendications 10 et 11, dans lequel le dispositif de commande sélectionne un profil de fonctionnement sur la base des signaux d'environnement.

13. Dispositif selon la revendication 10 ou la revendication 12, dans lequel les profils de fonctionnement correspondent à un ou plusieurs parmi : un mode de refroidissement ; un mode de récupération de chaleur ; un mode de ventilation ; un mode de chauffage ; un mode de recirculation ; et un mode automatique.
